**Europäisches Patentamt**

**European Patent Office**

**Office européen des brevets**

(11) Veröffentlichungsnummer: **0 361 588**

**A1**

# (12) EUROPÄISCHE PATENTANMELDUNG

(21) Anmeldenummer: **89202350.8**

(22) Anmeldetag: **18.09.89**

(51) Int. Cl.5: **G01D 5/26**

(30) Priorität: **24.09.88 DE 3832569**

(43) Veröffentlichungstag der Anmeldung:
**04.04.90 Patentblatt 90/14**

(84) Benannte Vertragsstaaten:
**DE FR GB SE**

(71) Anmelder: **Philips Patentverwaltung GmbH**
**Wendenstrasse 35 Postfach 10 51 49**
**D-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **FR GB SE**

(72) Erfinder: **Martens, Gerhard, Dr.**
**Breslauer Strasse 40**
**D-2359 Henstedt-Ulzburg(DE)**
Erfinder: **Kordts, Jürgen**
**Schinkelring 63a**
**D-2000 Norderstedt(DE)**
Erfinder: **Weidinger, Georg**
**Heidacker 64**
**D-2000 Hamburg 54(DE)**

(74) Vertreter: **Meier, Friedrich, Dipl.-Ing. et al**
**Philips Patentverwaltung GmbH**
**Wendenstrasse 35 Postfach 10 51 49**
**D-2000 Hamburg 1(DE)**

(54) **Faseroptischer Sensor.**

(57) Die Erfindung bezieht sich auf einen faseroptischen Sensor mit einer Lichtsendeanordnung (6), die Sendelicht in wenigstens einen ersten Lichtwellenleiter (3, 4) einspeist, und mit einer Lichtempfangsanordnung (7), die Empfangslicht aus dem ersten Lichtwellenleiter und wenigstens einem zweiten Lichtwellenleiter (4, 3) empfängt. Die Lichtwellenleiter (3, 4) weisen nebeneinander verlaufende Abschnitte (1) auf, die bereichsweise lichtübertragend berührbar sind und in diesem Bereich gemeinsam in einer Umhüllung (5) eingespannt sind, über die ein Druck oder eine Kraft auf die Lichtwellenleiter einwirkt. Die Lichtsendeanordnung (6) speist noch ein erstes Sendelicht in den ersten Lichtwellenleiter (3, 4) und ein zweites Sendelicht in den zweiten Lichtwellenleiter (4, 3).

## Faseroptischer Sensor

Die Erfindung bezieht sich auf einen faseroptischen Sensor mit einer Lichtsendeanordnung, die Sendelicht in wenigstens einen ersten Lichtwellenleiter einspeist, und mit einer Lichtempfangsanordnung, die Empfangslicht aus dem ersten Lichtwellenleiter und wenigstens einem zweiten Lichtwellenleiter empfängt, wobei die Lichtwellenleiter nebeneinander verlaufende, Licht überkoppelbare Abschnitte aufweisen.

Ein solcher faseroptischer Sensor, der zwei Lichtwellenleiter (oder Lichtfasern) mit zwei nebeneinander liegenden, Licht überkoppelbaren Abschnitten enthält, ist aus der DE-PS 34 15 242 bekannt. Ein Lichtwellenleiter besteht hierbei aus einem lichtleitenden Kern mit einem diesen Kern umgebenden Mantel. In den nebeneinander liegenden Abschnitten der Lichtwellenleiter ist ein Stück vom Mantel entfernt. Befindet sich eine Flüssigkeit in diesem Spaltbereich, so wird ein Anteil des Lichts von einem Lichtwellenleiter zum anderen übertragen. In den einen Lichtwellenleiter wird dabei Licht von einer Lichtsendeanordnung eingestrahlt. Das in den anderen Lichtwellenleiter über den Spaltbereich überkoppelte Licht und das im Lichtwellenleiter verbleibende Licht werden in einer Lichtempfangsanordnung empfangen und ausgewertet. Durch Verhältnisbildung der beiden Lichtanteile werden alle Störungen (z.B. Dämpfungen), die zwischen der Lichtsendeanordnung und Spaltbereich auftreten, eliminiert. Unter der Voraussetzung, daß die Lichtwellenleiter zwischen Spaltbereich und Lichtempfangsanordnung den gleichen Einflüssen ausgesetzt sind, werden auch die durch sie hervorgerufenen Störungen eliminiert. Diese Voraussetzung ist in der Realität allerdings selten gegeben. Dieser faseroptische Sensor kann beispielsweise Temperaturen einer Thermoflüssigkeit messen, die in den Spaltbereich eingebracht wird. Des weiteren ist eine Druckmessung möglich, bei der in Abhängigkeit vom Druck sich die Brechzahl der Flüssigkeit ändert. Hierbei muß eine zusätzliche druckfeste, komplizierte Anordnung vorgesehen sein, welche die Flüssigkeit in den Spaltbereich bringt bzw. im Spaltbereich hält.

Aus der DE-OS 30 12 328 ist ferner ein faseroptisches Meßgerät bekannt, bei dem ein Lichtwellenleiter und ein lichtleitender oder lichtabsorbierender Kunststoff nebeneinander angeordnet sind. Der Lichtleiter weist einen vom Mantel freigelegten lichtleitenden Kern auf. Durch den hydrostatischen Druck in einem mit Flüssigkeit gefüllten Behälter wird entsprechend dem Niveau im Behälter der Kunststoff über einen bestimmten Bereich gegen den Lichtwellenleiter gedrückt. Hierdurch wird ein bestimmter Anteil des in den Lichtwellenleiter eingestrahlten Lichts in den Kunststoff ausgekoppelt. Der Lichtwellenleiter ist unter Zwischenschaltung eines Interferenzfilters über weitere Lichtwellenleiter mit zwei Lichtquellen (Lichtsendeanordnung) unterschiedlicher Wellenlänge und einer Lichtempfangsanordnung verbunden. Das Licht der ersten Lichtquelle wird vom Interferenzfilter reflektiert und gelangt über eine Verzweigung der Lichtwellenleiter als Bezugssignal zur Lichtempfangsanordnung. Die beiden Lichtquellen werden wechselweise gespeist, wobei synchron hierzu die entsprechenden elektrischen Signale erfaßt werden, um durch eine Quotientenbildung in einer Divisionsschaltung ein Meßsignal zu erhalten, dessen Größe davon abhängt, wieviel Licht durch das Andrücken des Kunststoffes gegen den feststehenden Lichtwellenleiter ausgekoppelt worden ist und wieviel Licht über den Lichtwellenleiter nach Reflexion zur Lichtempfangsanordnung geleitet wird. Bei diesem Meßgerät wird durch die Quotientenbildung der Dämpfungseinfluß der Lichtwellenleiter zwischen Interferenzfilter und Lichtsende- und -empfangsanordnung eliminiert. Drifteigenschaften der in der Sende- und Empfangsanordnung eingesetzten Verzweigungen werden aber nicht eliminiert. Da ein Teil des Lichts in den Kunststoff überkoppelt wird, wird nur ein Teil des gesendeten Lichts zur Meßauswertung verwendet. Das kann insbesondere bei hohen Flüssigkeitsständen, wo ein sehr großer Teil des Lichts ausgekoppelt wird, zu ungenauen Meßergebnissen führen.

Der Erfindung liegt daher die Aufgabe zugrunde, einen faseroptischen Sensor zu schaffen, der alle Störungen, die zwischen Lichtsende- und Lichtempfangsanordnung auftreten und beide Lichtwellenleiter unterschiedlich beeinflussen, eliminert und der einfach aufgebaut ist.

Diese Aufgabe wird bei einem faseroptischen Sensor der eingangs genannten Art dadurch gelöst, daß die Lichtsendeanordnung ein erstes Sendelicht in den ersten Lichtwellenleiter und ein zweites Sendelicht in den zweiten Lichtwellenleiter einspeist und daß die nebeneinander verlaufenden Abschnitte der Lichtwellenleiter bereichsweise lichtübertragend berührbar sind und in diesem Bereich gemeinsam in einer Umhüllung eingespannt sind, über die unmittelbar oder zusätzlich ein Druck oder eine Kraft auf die Lichtwellenleiter einwirkt.

Bei diesem faseroptischen Sensor wird in Abhängigkeit von dem einwirkenden Druck oder der Kraft der optische Kopplungsgrad zwischen den Lichtwellenleitern verändert. Hierbei wird die gemeinsame Kontaktfläche zwischen den Lichtwellenleitern im Kontaktbereich vergrößert. Der Kontaktbereich ist der Abschnitt der Lichtwellenleiter, der in der Umhüllung verläuft, und in dem die Lichtwellenleiter berührbar sind. Die Umhüllung mit den eingespannten Lichtwellenleitern bildet dabei eine Kopplungsanordnung. Bei einem einwirkenden Druck bzw. einer einwirkenden Kraft wird also mehr Licht über den Kontaktbereich von einem zum anderen Lichtwellenleiter übertragen.

Die Lichtleiter bestehen aus einem lichtleitenden, einen runden Querschnitt aufweisenden Kern und einem daran angeordneten Mantel. Der Mantel weist einen kleineren Brechungsindex als der Kern auf, so daß das Licht nur innerhalb des Kerns geführt wird.

Zur Eliminierung von Störungen, die auf beide Lichtwellenleiter einwirken, wird ein erstes Sendelicht in den ersten Lichtwellenleiter und ein zweites Sendelicht in den zweiten Lichtwellenleiter eingestrahlt. Durch eine Verhältnisbildung der empfangenen Lichtanteile können Störungen, z.B. Dämpfungseinflüsse, herausgerechnet werden. Das so erhaltene Meßsignal ist abhängig von der Belastung des faseroptischen Sensors, aber nicht abhängig von den optischen Konstanten der Lichtwellenleiter und von der verwendeten Wellenlänge des Sendelichts. Lichtsendeanordnung und Lichtwellenleiter brauchen daher bezüglich der Wellenlänge nicht aufeinander abgestimmt oder angepaßt zu werden. Dadurch ergibt sich eine leichte Austauschbarkeit von Lichtsendeanordnung, Lichtwellenleitern und Kopplungsanordnung.

Das erste und zweite Sendelicht können einerseits von der Lichtsendeanordnung zeitlich abwechselnd in den ersten bzw. zweiten Lichtwellenleiter eingespeist werden. Andererseits kann die Lichtsendeanordnung das erste und zweite Sendelicht gleichzeitig einspeisen, wenn die Intensität des ersten Sendelichts mittels eines ersten Modulationssignals mit einer ersten Frequenz und die Intensität des zweiten Sendelichts mittels eines zweiten Modulationssignals mit einer zweiten Frequenz amplitudenmoduliert ist. Die Lichtsendeanordnung kann also im Zeit-oder Frequenzmultiplex betrieben werden.

Der faseroptische Sensor kann des weiteren vom Transmissions- oder Reflexiontyp sein. Wenn er vom Transmissionstyp ist, sind an einem Ende der jeweiligen Lichtwellenleiter die Sendeanordnung und an dem anderen Ende die Lichtempfangsanordnung angebracht. Bei einer Ausführung als Reflexiontyp ist das eine Ende der jeweiligen Lichtwellenleiter in der Umhüllung angebracht. Dabei ist das andere Ende der Lichtwellenleiter über Koppler mit der Lichtsende- und Lichtempfangsanordnung verbunden.

Der faseroptische Sensor muß mindestens zwei Lichtwellenleiter enthalten, die in ihrem Kontaktbereich Sendelicht überkoppeln können. Es ist auch möglich weitere Lichtwellenleiter in der Umhüllung anzuordnen, die ebenfalls einen lichtübertragenden Kontaktbereich aufweisen. Solche weiteren Lichtwellenleiter können zur mechanischen Stabilisierung der Lichtwellenleiter und als Ersatzlichtwellenleiter bei einem Bruch der Sendelicht bzw. Empfangslicht führenden Lichtwellenleiter dienen.

In einer Weiterbildung der Erfindung ist vorgesehen, daß die beiden in der Umhüllung eingespannten Lichtwellenleiter in ihrem Kontaktbereich einen Längsschliff aufweisen. Hierdurch ergibt sich ein einfacher mechanischer stabiler faseroptischer Sensor. In der Umhüllung muß der Mantel der Lichtwellenleiter nicht vollständig entfernt sein, sondern nur im Kontaktbereich.

In einer anderen Weiterbildung der Erfindung sind die Lichtwellenleiter im Kontaktbereich parallel zueinander angeordnet. Hierbei sollte vorzugsweise nur der Mantel vom Lichtwellenleiter in der Umhüllung abgelöst sein. Die Kerne der Lichtwellenleiter berühren sich einander. Mit steigender Krafteinwirkung wird der Querschnitt der Kerne deformiert und die gemeinsame Kontaktfläche zwischen den beiden Kernen wird vergrößert.

Um das Abrutschen der Kerne zu verhindern, wie das bei der letztgenannten Anordnung möglich ist, ist vorgesehen, daß die Lichtwellenleiter im Kontaktbereich miteinander verdrillt sind. Auch hierbei sind die Kerne der Lichtwellenleiter in der Umhüllung freigelegt.

Die Umhüllung dient zur Fixierung der Lichtwellenleiter im kraft- bzw. druckaufnehmenden Bereich des faseroptischen Sensors. Eine solche Umhüllung enthält in einer ersten Ausführungsform zwei zueinander parallel verlaufende Platten mit Nuten für die Lichtwellenleiter. Diese Nuten können als V-Nuten in der Mitte der Platten ausgebildet sein. Hierbei sollten vorzugsweise zu höherer mechanischen Stabilisierung mindestens drei Nuten vorhanden sein, d.h. in einer Platte eine Nute und in der anderen Platte zwei weitere Nuten. Die drei Lichtwellenleiter sind dann pyramidenförmig angeordnet. Der dritte Lichtwellenleiter dient auch als Ersatzlichtwellenleiter bei Bruch eines der beiden anderen Lichtwellenleiter. An den Rändern beider Platten, die z.B. aus Quarzglas bestehen, können jeweils Verbindungsstücke aus Quarzglasfolie angebracht werden.

Bei einer weiteren Ausführungsform der Umhüllung ist vorgesehen, daß die Umhüllung aus einer Kapillare, vorzugsweise aus Quarzglas besteht. Hierbei werden die von ihrem Mantel befreiten Kerne der Lichtwellenleiter durch eine Quarzglaskapillare geführt. Die Kapillare wird an einer Stelle bis zum Erweichen erhitzt und dann so weit zusammengeschmolzen, bis die Innenfläche an dieser Stelle der Kapillare die Kerne symmetrisch umschließt. Eine Belastung auf die Außenwand der Kapillare führt zu einem Aneinanderpreßen der Lichtwellenleiterkerne und damit zu einem belastungsabhängigen Anstieg der optischen Kopplung zwischen ihnen. Wird als faseroptischer Sensor ein Reflexionstyp verwendet, so weist die Kapillare nicht eine durchgehende Öffnung auf, sondern ist an einem Ende geschlossen, und auf den Endflächen der Lichtwellenleiter innerhalb der Kapillare befindet sich eine reflektierende Schicht.

Bestehen die Umhüllung und die Lichtwellenleiter aus Material mit unterschiedlichen thermischen Ausdehnungskoeffizienten, so eignet sich ein solcher faseroptischer Sensor zur Temperaturmessung. Bei einer Veränderung der Temperatur verändern sich die Druck- bzw. Kraftverhältnisse zwischen Umhüllung und Lichtwellenleitern. Hierbei wirkt also eine Kraft bzw. ein Druck unmittelbar von der Umhüllung auf die Lichtwellenleiter ein.

Bei einem faseroptischen Sensor zur Druck- oder Kraftmessung bestehen die Umhüllung und die Lichtwellenleiter aus Material mit annähernd gleichem thermischen Ausdehnungskoeffizienten. Hierbei wirkt eine Kraft oder ein Druck zusätzlich auf die Lichtwellenleiter über die Umhüllung ein.

Zur Ermittlung der physikalischen Größe, die auf den faseroptischen Sensor einwirkt, ist vorgesehen, daß die Lichtempfangsanordnung für die Intensität des Empfangslichts elektrische Signale bildet, aus denen in einer Auswerteschaltung die physikalische Größe ermittelt wird, indem das Verhältnis der Produkte $I_{11}$ $I_{22}$ und $I_{21}$ $I_{12}$ gebildet wird, wobei $I_{11}$ die Intensität des vom ersten Sendelicht herrührenden, im ersten Lichtwellenleiter verbleibenden Lichtanteils ist, $I_{22}$ die Intensität des vom zweiten Sendelicht herrührenden, im zweiten Lichtleiter verbleibenden Lichtanteils ist, $I_{21}$ die Intensität des vom ersten Sendelicht herrührenden, in den zweiten Lichtwellenleiter überkoppelten Lichtanteils ist und $I_{12}$ die Intensität des vom zweiten Sendelicht herrührenden, in den ersten Lichtwellenleiter überkoppelten Lichtanteils ist. Die optische Kopplung zwischen zwei Lichtwellenleitern wird durch das Verhältnis der Intensitäten des Empfangslichts in zwei Lichtwellenleitern bestimmt. Die physikalische Größe kann z.B. über die Gleichung

$$Q = I_{11} I_{22}/(I_{21} I_{12})$$

bestimmt werden, wobei Q ein Maß für die physikalische Größe darstellt. Hierbei ist der optische Kopplungsgrad K durch die Quadratwurzel aus dem Maß Q gegeben.

In einer anderen Weiterbildung ist vorgesehen, daß die Lichtwellenleiter wenigstens in ihrem Kontaktbereich als integrierte optische Schicht- oder Streifenwellenleiter ausgebildet sind.

Ausführungsbeispiele der Erfindung werden nachstehend anhand der Zeichnungen näher erläutert. Es zeigen:

Fig. 1 einen vereinfacht dargestellten faseroptischen Sensor,

Fig. 2 ein im faseroptischen Sensor nach Fig. 1 verwendete erste Kopplungsanordnung,

Fig. 3 und 4 zwei weitere Kopplungsvarianten der Lichtwellenleiter in der Kopplungsanordnung und

Fig. 5 und 6 zwei weitere Kopplungsanordnungen.

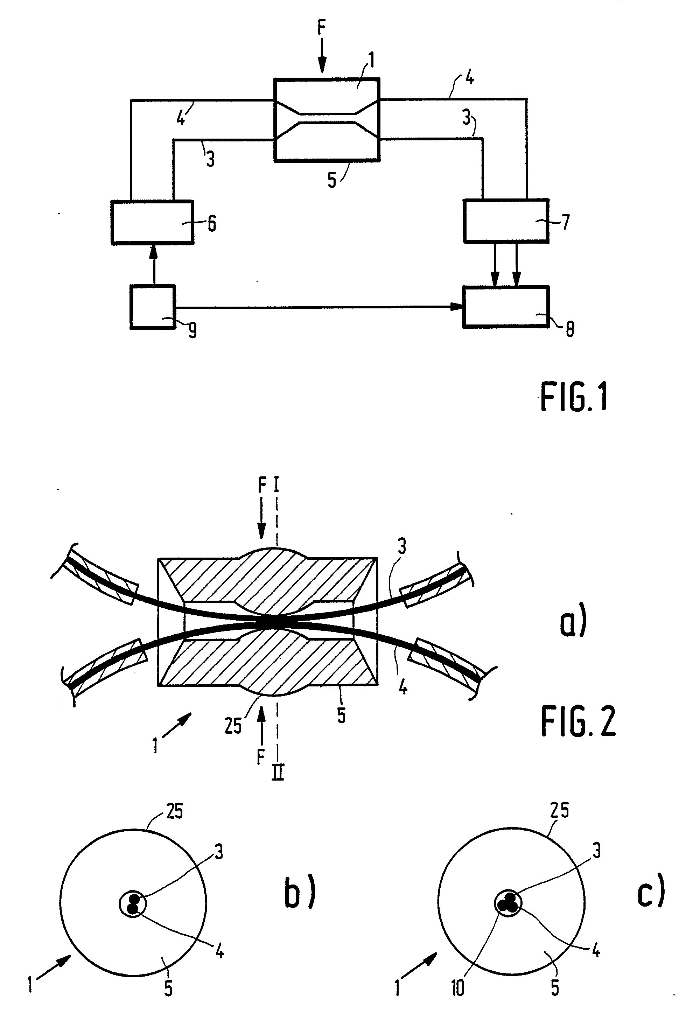

In der Fig. 1 ist ein vereinfacht dargestellter faseroptischer Sensor mit einer Kopplungsanordnung 1 dargestellt, mit dessen Hilfe z.B. ein Druck, eine Kraft oder eine Temperatur gemessen werden kann. In der Kopplungsanordnung 1 verlaufen nebeneinander liegende Abschnitte zweier Lichtwellenleiter 3 und 4 (Lichtfasern), die einen Kontaktbereich aufweisen, in der Licht von einem Lichtwellenleiter zum anderen durch Berührung überkoppelbar ist. Die Kopplungsanordnung 1 enthält des weiteren eine Umhüllung 5, in der die Lichtwellenleiter 3 und 4 eingespannt sind. Bei Einwirkung einer Kraft oder eines Druckes berühren sich die Lichtwellenleiter 3 und 4 in ihrem Kontaktbereich; oder die Lichtwellenleiter 3 und 4 berühren sich vor der Einwirkung der Kraft oder des Druckes in ihrem Kontaktbereich und bei Einwirkung der Kraft oder des Druckes wird die Kontaktfläche vergrößert. Die Lichtwellenleiter 3 und 4 sind jeweils mit einer Lichtsendeanordnung 6 und mit einer Lichtempfangsanordnung 7 verbunden. Die Lichtsendeanordnung 7 sendet ein erstes Sendelicht über den ersten Lichtwellenleiter 3 und ein zweites Sendelicht über den zweiten Lichtwellenleiter 4, wovon ein gewisser Anteil in der Kopplungsanordnung 1 in den zweiten Lichtwellenleiter 4 bzw. in den ersten Lichtwellenleiter 3 überkoppelt wird. Der im ersten bzw. zweiten Lichtwellenleiter 3, 4 verbleibende und im zweiten bzw. ersten Lichtwellenleiter 4, 3 überkoppelte Lichtanteil werden zu der Lichtempfangsanordnung 7 geführt, wo diese in elektrische Signale umgewandelt werden und einer elektrischen Auswerteschaltung 8 zugeleitet werden.

Die Lichtsendeanordnung 6 kann das erste und zweite Sendelicht zeitlich abwechselnd in den ersten bzw. zweiten Lichtwellenleiter einspeisen (Zeitmultiplex) oder ein erstes und zweites Sendelicht erzeugen, deren Intensitäten durch zwei Modulationssignale mit unterschiedlichen Frequenzen amplitudenmoduliert sind und beide gleichzeitig in die Lichtwellenleiter 3 und 4 einkoppeln (Frequenzmultiplex). Wenn das erste und zweite Sendelicht zeitlich abwechselnd in die Lichtwellenleiter 3 und 4 eingestrahlt wird, wird mit Hilfe einer Taktschaltung 9 eine Synchronisation vorgenommen, um so das erste und zweite Sendelicht identifizieren zu können. Beispielsweise wird bei der Aussendung des ersten Sendelichts ein positiver Impuls an die Lichtsendeanordnung 6 und die Auswerteschaltung 8 geleitet und bei Aussendung des zweiten Sendelichts ein negativer Impuls abgegeben.

In der Auswerteschaltung 8 wird ein Maß Q für die zu bestimmende physikalische Größe aus den elektrischen Signalen ermittelt. Hierbei werden die elektrischen Signale, welche proportional der Lichtintensität des Empfangslichts sind, in der folgenden Gleichung berechnet:
$Q = I_{11} I_{22}/(I_{21} I_{12})$.

$I_{11}$ ist die Intensität des vom ersten Sendelicht herrührenden, im ersten Lichtwellenleiter verbleibenden Lichtanteils, $I_{22}$ ist die Intensität des vom zweiten Sendelicht herrührenden, im zweiten Lichtwellenleiter verbleibenden Lichtanteils, $I_{21}$ die Intensität des vom ersten Sendelicht herrührenden, in den zweiten Lichtwellenleiter überkoppelten Lichtanteils und $I_{12}$ die Intensität des vom zweiten Sendelicht herrührenden, in den ersten Lichtwellenleiter überkoppelten Lichtanteils. Das Maß Q für die physikalische Größe ist unabhängig von den Dämpfungsverlusten in den beiden Lichtwellenleitern 3 und 4 und stellt die Kopplung zwischen den Lichtwellenleitern 3 und 4 in der Koppelanordnung 1 dar. Die Kopplung K ist dabei abhängig von der Starke der physikalischen Meßgröße. Der Zusammenhang zwischen dem abgeleiteten Maß Q der physikalischen Größe und der Kopplung K ist gegeben durch die Gleichung: $Q = K^2$.

In Fig. 2a ist ein erstes Ausführungsbeispiel der Kopplungsanordnung 1 dargestellt. Die Lichtwellenleiter 3 und 4 weisen jeweils einen lichtleitenden Kern mit einem runden Querschnitt auf, um die ein Mantel angeordnet ist. Der Mantel weist einen kleineren Brechungsindex als der lichtleitende Kern auf, so daß das Licht nur innerhalb des Kerns geführt wird. In einem bestimmten Bereich, in dem um die Lichtwellenleiter 3 und 4 die Umhüllung 5 gelegt ist, ist der Mantel von den jeweiligen Lichtwellenleitern 3 und 4 entfernt. Die Umhüllung 5 besteht aus einer Quarzglaskapillare mit einem verdickten Glasring 25 in der Mitte der Glaskapillare. An dem Glasring 25 sind die Lichtwellenleiter 3 und 4 unter Druck eingespannt und verlaufen parallel innerhalb des Glasringes 25. Eine Druck- oder Kraftbelastung F auf die Kapillare 5 führt zu einem Aneinanderpreßen der Kerne der Lichtwellenleiter 3 und 4 und zu einem druck- bzw. kraftabhängigen Anstieg der optischen Kopplung zwischen ihnen.

In den Fig. 2b und c sind jeweils zwei Schnittbilder der Kopplungsanordnung 1 längs der Linie I-II dargestellt. Die Fig. 2b zeigt zwei Lichtwellenleiter 3 und 4, die durch die Kapillare 5 verlaufen, und die Fig. 2c zeigt drei Lichtwellenleiter 3, 4 und 10, die durch die Kapillare 5 verlaufen. Der zusätzliche Lichtwellenleiter 10 bewirkt, daß die Kopplungsanordnung 1 mechanisch stabiler ist und die Lichtwellenleiter 3, 4 und 10 nicht voneinander abrutschen können. Falls einer der Lichtwellenleiter 3 und 4 durch einen Faserbruch ausfällt, kann der dritte Lichtwellenleiter 10 als Ersatz dienen.

Die Kopplungsanordnung 1 in Fig. 2 läßt sich entweder zur Messung von Druck und Kraft oder zur Temperaturmessung einsetzen. Bei einem Einsatz zur Temperaturmessung müssen die Kapillare 5 und die Lichtwellenleiter 3 und 4 bzw. 10 unterschiedliche thermische Ausdehnungskoeffizienten besitzen. Aufgrund der unterschiedlichen thermischen Ausdehnungskoeffizienten zwischen den Lichtwellenleitern 3 und 4 bzw. 10 und der Kapillare 5 ist die optische Kopplung zwischen den Kernen der Lichtwellenleiter 3 und 4 bzw. 10 temperaturabhängig, so daß auf diese Weise ein Temperatursensor realisiert wird. Bei einer Verwendung des faseroptischen Sensors zur Druck- und Kraftmessung müssen die thermischen Temperaturkoeffizienten der Kapillare 5 und der Lichtwellenleiter 3 und 4 annähernd die gleiche Größe besitzen.

Durch Näherungsrechnungen läßt sich das Maß Q für die physikalische Größe der Kopplungsanordnung 1 nach Fig. 2 bestimmen:
$Q = L F/(8 \pi E R^3)$,
wobei L die Länge darstellt, auf der sich die beiden Lichtwellenleiter 3 und 4 berühren, F die Kraft, E das E-Modul und R der Radius der lichtleitenden Kerne der Lichtwellenleiter 3 und 4.

Hergestellt wird die Kopplungsanordnung 1 gemäß Fig. 2, indem zuerst die lichtleitenden Kerne der Lichtwellenleiter 3 und 4 freigelegt werden und dann durch eine Quarzglaskapillare 5 geführt werden. Ungefähr in der Mitte der Kapillare 5 wird die Kapillare 5 bis zum Erweichen erhitzt. Anschließend wird sie so weit zusammengeschmolzen, bis die Innenfläche der Kapillare 5 die Kerne der Lichtwellenleiter 3 und 4 symmetrisch umschließt und einspannt. Hierbei wird an der Erhitzungsstelle ein Glasring 25 gebildet.

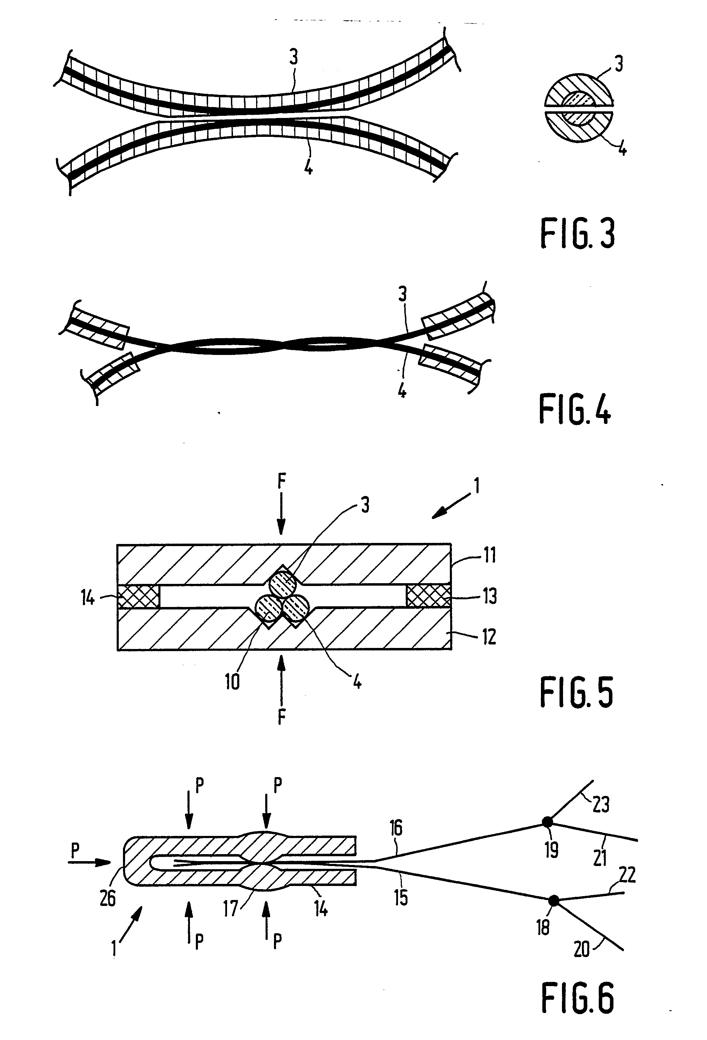

Die in der Umhüllung 5 verlaufenden Lichtwellenleiter 3 und 4 brauchen nicht vollständig von ihrem Mantel entfernt zu werden. In einer anderen Ausführung in Fig. 3 sind die Lichtwellenleiter 3 und 4 längs ihrer Achse angeschliffen. Im unbelasteten Zustand sind die Lichtwellenleiter 3 und 4 in ihrem Kontaktbereich, das ist der Bereich, in dem zumindest bei einer Belastung eine Berührung der Lichtwellenleiter 3 und 4 stattfindet, durch einen geringen Spalt voneinander getrennt. Bei einer Belastung bewegen sich die abgeschliffenen Flächen der Lichtwellenleiter 3 und 4 aufeinander zu. In Abhängigkeit von der Druck- bzw. Kraftbelastung wird die Größe der Kontaktfläche zwischen den Lichtwellenleitern 3 und 4 bestimmt und damit die Größe der optischen Kopplung.

Eine andere Möglichkeit die Lichtwellenleiter 3 und 4 im Kontaktbereich anzuordnen, ist aus der Fig. 4 ersichtlich. Hier sind die Kerne der Lichtwellenleiter 3 und 4 in ihrem Kontaktbereich miteinander verdrillt. Diese Anordnung zeichnet sich dadurch aus, daß ein mechanisches Verrutschen der Lichtwellenleiter 3 und 4 in der Umhüllung 5 nicht auftreten kann.

Ein weiteres Ausführungsbeispiel für eine Kopplungsanordnung 1 wird in Fig. 5 gezeigt. Hier weisen zwei parallel zueinander angeordnete Quarzplatten 11 und 12 in ihrer Mitte V-Nuten auf. Die erste Platte 11 hat ungefähr in ihrer Mitte eine V-Nut, deren Spitze zur Außenfläche zeigt und die andere Platte 12 weist zwei V-Nuten auf, deren Spitzen ebenfalls zur Außenfläche der Platte 12 zeigen. Die V-Nuten sind dabei so angeordnet, daß die in ihnen verlaufenden Lichtwellenleiter 3, 4 und 10 pyramidenförmig zueinander gesetzt sind. An den Rändern der Platten 11 und 12 sind noch jeweils zwei Verbindungsstücke 13 und 14 aus Quarzglasfolie zwischen die Platten 11 und 12 gebracht.

Die in den Fig. 2 und 5 dargestellten Kopplungsanordnungen 1 sind für einen faseroptischen Sensor vom Transmissionstyp geeignet. Bei einem faseroptischen Sensor vom Transmissionstyp ist an einem Ende der Lichtwellenleiter die Lichtsendeanordnung und am anderen Ende die Lichtempfangsanordnung angebracht. In Fig. 6 ist eine weitere Kopplungsanordnung 1 dargestellt, die einen faseroptischen Sensor vom Reflexionstyp zeigt. Diese Kopplungsanordnung enthält 1 eine Quarzglaskapillare 14, deren eines Ende 26 geschlossen ist. Innerhalb der Kapillare 14 verlaufen zwei von ihren Mänteln entfernte Lichtwellenleiter 15 und 16. Die Kapillare 14 weist in ihrer Mitte einen verdickten Glasring 17 auf, der die lichtleitenden Kerne der Lichtwellenleiter 15 und 16 unter Druck einspannt. Auf den Endflächen der in der Glaskapillare 14 eingeschlossenen Lichtwellenleitern 15 und 16 sind reflektierende Schichten aufgebracht, die das in den lichtleitenden Kernen der Lichtwellenleiter 15 und 16 befindliche Licht reflektieren. Eine Druckbelastung P auf die Außenwand der Glaskapillare führt zu einem weiteren Aneinanderpreßen der Glaskerne und damit zu einem druckabhängigen Anstieg der optischen Kopplung zwischen ihnen.

Die beiden Lichtwellenleiter 15 und 16 sind jeweils mit einer Teileranordnung 18 und 19 verbunden, die des weiteren jeweils einen Lichtwellenleiter aufweisen, der zur Lichtsendeanordnung führt und einen weiteren Lichtwellenleiter aufweisen, der zur Lichtempfangsanordnung führt. Die Lichtsende- und Lichtempfangsanordnungen sind hier der Einfachheit halber nicht dargestellt. Ein erstes Sendelicht wird also über einen Lichtwellenleiter 20 über die Teileranordnung 18 in den Lichtwellenleiter 15 und ein zweites Sendelicht über einen Lichtwellenleiter 21 in die Teileranordnung 19 in den Lichtwellenleiter 16 eingestrahlt. Reflektiertes Licht gelangt einerseits über den Lichtwellenleiter 15 und die Teileranordnung 18 in einen Lichtwellenleiter 22, der mit der Lichtempfangsanordnung verbunden ist. Die Lichtempfangsanordnung ist des weiteren mit einem Lichtwellenleiter 23 verbunden, der Licht von dem Lichtwellenleiter 16 über die Teileranordnung 19 erhält.

Bei diesem faseroptischen Sensor vom Reflexionstyp können Probleme an optischen Grenzflächen, speziell an Steckerstirnflächen vorkommen. Hier werden nämlich häufig Reflexe hervorgerufen, die sich jedoch durch spezielle Stecker mit Schräganschliff der Faserendflächen vermeiden lassen.

In der Kopplungsanordnung 1 lassen sich nicht nur speziell präparierte Lichtwellenleiter verwenden, sondern auch Schicht- oder Streifenwellenleiter, wie sie in der integrierten Optik eingesetzt werden.

## Ansprüche

1. Faseroptischer Sensor mit einer Lichtsendeanordnung (6), die Sendelicht in wenigstens einen ersten Lichtwellenleiter einspeist, und mit einer Lichtempfangsanordnung (7), die Empfangslicht aus dem ersten Lichtwellenleiter und wenigstens einem zweiten Lichtwellenleiter empfängt, wobei die Lichtwellenleiter (3, 4) nebeneinander verlaufende Licht überkoppelbare Abschnitte aufweisen, dadurch gekennzeichnet, daß die Lichtsendeanordnung (6) eine erstes Sendelicht in den ersten Lichtwellenleiter (3, 4) und ein zweites Sendelicht in den zweiten Lichtwellenleiter (4, 3), einspeist und daß die nebeneinander verlaufenden Abschnitte (1) der Lichtwellenleiter (3, 4) gemeinsam in einer Umhüllung (5) eingespannt sind, über die ein Druck oder eine Kraft auf die Lichtwellenleiter (3, 4) einwirkt, durch deren Einwirkung die Lichtwellenleiter (3, 4) bereichsweise lichtübertragend berührbar sind.

2. Faseroptischer Sensor nach Anspruch 1, dadurch gekennzeichnet, daß die beiden in der Umhüllung eingespannten Lichtwellenleiter (3, 4) in ihrem Kontaktbereich einen Längsschliff aufweisen (Fig. 3).

3. Faseroptischer Sensor nach Anspruch 1, dadurch gekennzeichnet, daß die Lichtwellenleiter (3, 4) im Kontaktbereich parallel zueinander angeordnet sind.

4. Faseroptischer Sensor nach Anspruch 1, dadurch gekennzeichnet, daß die Lichtwellenleiter (3, 4) im Kontaktbereich miteinander verdrillt sind (Fig. 4).

5. Faseroptischer Sensor nach einem der vorhergehenden Ansprüche, dadurch gekennzeichnet, daß die Umhüllung zwei zueinander parallel verlaufende Platten (11, 12) mit Nuten für die Lichtwellenleiter enthält.

6. Faseroptischer Sensor nach einem der Ansprüche 1 bis 4,
dadurch gekennzeichnet, daß die Umhüllung (5) eine Kapillare, vorzugsweise aus Quarzglas, enthält.

7. Faseroptischer Sensor nach einem der vorhergehenden Ansprüche, dadurch gekennzeichnet, daß zur Temperaturmessung die Umhüllung und die Lichtwellenleiter aus Material mit unterschiedlichem thermischen Ausdehnungskoeffizienten bestehen.

8. Faseroptischer Sensor nach einem der vorhergehenden Ansprüche 1 bis 6,
dadurch gekennzeichnet, daß zur Druck- oder Kraftmessung die Umhüllung und die Lichtwellenleiter aus Material mit annähernd gleichem thermischen Ausdehungskoeffizienten bestehen.

9. Faseroptischer Sensor nach einem der vorhergehenden Ansprüche,
dadurch gekennzeichnet, daß die Lichtempfangsanordnung (7) für die Intensität des Empfangslichts elektrische Signale bildet, aus denen in einer Auswerteschaltung (8) die physikalische Größe ermittelt wird, indem das Verhältnis der Produkte $I_{11}\,I_{22}$ und $I_{21}\,I_{12}$ gebildet wird, wobei $I_{11}$ die Intensität des vom ersten Sendelicht herrührenden, im ersten Lichtwellenleiter (3, 4) verbleibenden Lichtanteils ist,
$I_{22}$ die Intensität des vom zweiten Sendelicht herrührenden, im zweiten Lichtwellenleiter (4, 3) verbleibenden Lichtanteils ist,
$I_{21}$ die Intensität des vom ersten Sendelicht herrührenden, in den zweiten Lichtwellenleiter (4, 3) überkoppelten Lichtanteils ist und
$I_{12}$ die Intensität des vom zweiten Sendelicht herrührenden, in den ersten Lichtwellenleiter (3, 4) überkoppelten Lichtanteils ist.

10. Faseroptischer Sensor nach einem der vorhergehenden Ansprüche,
dadurch gekennzeichnet, daß die Lichtwellenleiter (3, 4) wenigstens in ihrem Kontaktbereich als integrierte optische Schicht- oder Streifenwellenleiter ausgebildet sind.

FIG.1

a)

FIG.2

b)

c)

FIG.3

FIG.4

FIG.5

FIG.6

**Europäisches Patentamt**

**EUROPÄISCHER RECHERCHENBERICHT**

Nummer der Anmeldung

EP 89202350.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) 5 |
|---|---|---|---|
| D,Y | <u>DE - C1 - 3 415 242</u> (FRAUNHOFER-GES.)   * Fig. 1; Zusammenfassung * -- | 1 | G 01 D  5/26 |
| Y | J. PHYS. E: SCI. INSTRUM., Band 18, 1985, Great Britain BARRY "Optical fibre sensors and systems for industry" Seiten 770-781   * Fig. 4; Seite 774 * ---- | 1 | |

RECHERCHIERTE SACHGEBIETE (Int. Cl.4) 5

G 01 D  5/00
G 01 F 23/00
G 01 N 21/00
G 02 B  6/00
G 02 F  1/00

Der vorliegende Recherchenbericht wurde für alle Patentansprüche erstellt.

| Recherchenort | Abschlußdatum der Recherche | Prüfer |
|---|---|---|
| WIEN | 29-12-1989 | KUNZE |